# EUROPEAN PATENT APPLICATION

(11) **EP 2 636 969 A1**
(43) Date of publication of application: **11.09.2013**
(21) Application number: 11837603.7
(22) Date of filing: 02.11.2011
(51) Int. Cl.: F24J 2/18, F24J 2/14

(54) **SOLAR COLLECTOR HAVING A MULTI-TUBE RECEIVER, THERMOSOLAR PLANTS THAT USE SAID COLLECTOR AND METHOD FOR OPERATING SAID PLANTS**

(30) Priority: 03.11.2010 ES 201001406 P
(71) Applicant: Abengoa Solar New Technologies, S.A., 41018 Sevilla (ES)
(72) Inventor: NUÑEZ BOOTELLO, Juan Pablo, E-41018 Sevilla (ES)
(74) Representative: Garcia-Cabrerizo y del Santo, Pedro Maria
(86) International application number: PCT/ES2011/000321
(87) International publication number: WO 2012/059605

(57) **Abstract**

The invention relates to a solar collector having a multi-tube receiver, to thermosolar plants that use said collector and to a method for operating said plants, where the multi-tube receivers have a primary reflector (5) formed by two continuous symmetrical parametric curves, a secondary reconcentrator (6) and a receiver (1) that includes several connected tubes (7) with a circular cross-section, the center of gravity of the collector being located very close to the axis of rotation of the collector itself, and the concentration ratio C/Cmax being greater than 0.63, having 100% collection efficiency and having a maximum of two reflections of solar rays (8). The thermosolar plants that use said multi-tube receivers combine same with cylindrical or trough collectors with a tubular receiver and can be used for the direct generation of steam (with a saturation and overheating zone) or the indirect generation of steam (with the collectors connected in series).

## Description

### Technical sector of the invention

The invention is encompassed within the technical sector of thermosolar technology, more specifically, within the cylindrical collectors sector, as well as within the plants where said collectors are installed, whether they are direct steam generation plants or plants which use a heat carrying fluid to produce steam in a subsequent exchanger.

### Background of the invention

The general principle of thermosolar technology is based around the concept of concentrating solar radiation in order to heat a heat carrying fluid and generate electricity.

The collection and concentration of solar energy is one of the biggest challenges in the development of thermosolar plants. There are two primary types of concentrator technology: point concentration and linear concentration. Linear concentration technology is easier to install since it has fewer degrees of freedom but it has a lower concentration factor and may therefore reach lower temperatures than point concentration technology.

Within the point concentrator category, parabolic dish concentrators and central towers can be distinguished. Within the linear technology category, the Parabolic Trough Concentrator (PTC) is the most mature concentration system but some new Fresnel-type Linear Collectors (FLC) are now emerging.

Fresnel collectors are composed of a primary and a secondary system. The primary system is formed by a series of parallel lines of reflecting mirrors, flat or slightly curved, with mobile structures responsible for emitting and directing the solar radiation towards the secondary system. The radiation reaches the opening of the secondary system and is redirected by some mirrors to an imaginary focal "tube", which is where the absorber tube is placed.

This secondary system is elevated several meters above the field of mirrors and is responsible for concentrating the solar radiation emitted by the primary system and directing it towards an absorber tube.

The absorber tube remains inert in the space independently of the collector which serves to track the sun. The reconcentrator has a double positive effect: it enables the collecting surface to be increased, preventing rays from escaping and facilitates concentration increase in the primary field. In addition, this type of collector facilitates the more compact use of land, since the lines are very close together.

Eventually, the land under the fields of mirrors may be used for purposes other than energy production. The lines are small in comparison with a parametric cylindrical collector, thereby wind loads are lower and the structures are lighter.

Parabolic trough technology is a more mature technology than Fresnel collector technology and has an extensive history serving to prove that it is ready to be installed on a large scale. This technology has been installed commercially since the 1980s and has exceptional performance. Since then, it has improved significantly in terms of both cost and output. Currently, there are 300 MWs in operation, 400 in construction and about 6 GWs being promoted on a global scale.

Parabolic trough technology operates based on solar tracking and by concentrating solar rays in high thermal efficiency receiver tubes located in the focal line of the parabolic trough collectors.

The main components of the solar field of the parabolic trough technology are as follows:
- The parabolic trough reflector: the purpose of the parabolic trough reflector is to reflect and concentrate direct solar radiation falling on the surface, on to the absorber tube. The mirrored surface is attained with films of silver or aluminum placed over a support which provides it with sufficient rigidity. Currently, the supporting means most frequently employed are metal sheets, glass, and plastic. This parabolic trough reflector is referred to as the primary reflector.
- The tubular absorber tube: in general, the absorber tube described as tubular consists of two concentric tubes, separated or not, by a vacuum layer. The inner tube, through which the fluid to be heated circulates, is made of metal and the outer tube is made of glass.
- The solar tracking system: the most common tracking system consists of a device which rotates the parabolic trough reflectors of the collector around a longitudinal axis, in such a way that the rays always fall perpendicularly on this axis and parallel to the optical axis of the trough.
- The metal structure: the collector's structure serves to provide rigidity to the aggregate of elements from which it is composed.

Traditionally, a heat carrying fluid or heat transmitting fluid, generally synthetic oil, circulates through the absorber tube, which is heated to approximately 400 °C by the concentrated solar rays. This oil is pumped through a series of heat exchangers at high temperatures in order to produce superheated steam.

However, in the last few years, the direct generation of steam with parabolic trough collectors has been in development. This technology (known as DSG), eliminates the need for an intermediary heat transmitting fluid in the solar field. The water is introduced directly through the interior of the receiver tubes and absorbs the energy reflected by the collectors, changing from its liquid phase into saturated steam and subsequently into superheated steam.

In both cases, the heat present in the steam is converted into electric energy by means of a conventional steam turbine and an alternator.

In terms of synthetic oils, the DSG has the following characteristics:
a) Oil is substituted for water.
b) It enables the maximum temperature of the solar field to be increased which, in the case of the oil, is imposed by the degradability thereof (400 °C), therefore making it possible to operating at more efficient power cycles.
c) Presents greater performance in the solar field owing to the fact that the average operating temperature of the collectors is slightly lower than the systems with oil and in addition, the temperature jump necessary in the oil/water exchanger is eliminated.
d) The investment costs in the exchanger train, expansion tank and other systems related to the use of oil are reduced.
e) Own consumption is reduced.
f) Since the thermal oil freezes at 12 °C, the problems related to oil freezing in the winter are avoided.

Whereby DGS plants are concerned, the steam produced in the solar field, in pressure conditions ranging from 60 to 100 bar and temperature conditions ranging from 400 °C to 525 °C, supplies the turbine directly without the need for an exchanger. In this type of plant, the solar field is divided into two parts. One part (around 80% of the field) is used to generate saturated steam at temperatures of approximately 300 °C and the rest of the field (approximately the remaining 20%) is used for overheating. In addition, the temperature of the water upon entering the solar field is reduced to around 240 °C.

The average working temperature of DSG plants is therefore lower than in the case of synthetic oil. This limits radiation losses and opens the door for collectors with receivers, without a vacuum or other types of receivers allowing convection losses to be minimized, to be used, at least in areas of the solar field working at lower temperatures.

From an optical standpoint, whereby current parabolic trough collectors are concerned, all rays reaching the trough within the angle of incidence of the design are reflected towards the absorber tube. The collection efficiency of this concentrator, defined as the fraction of incident power within the angle of acceptance of the primary, reaching the absorber tube, is 100%. It is possible to check that the concentration of current parabolic trough collectors is about 26 suns, whilst the second principle of thermodynamics makes it possible to affirm that, by keeping current acceptance angles, it is possible to reach 83 suns. In order words, the concentration of current collectors may theoretically increase 3.2 times.

Through recent history there have been various attempts to increase the concentration of parabolic trough collectors by means of secondary reconcentrators:
- In the case of a single tubular receiver, it has been demonstrated that it is possible to reach the maximum concentration with a collection efficiency of 100% with a secondary parabolic CPC (Compound Parabolic Concentrator) type reconcentrator. However, from a practical standpoint, this reconcentrator presents several significant disadvantages which curb its use. In some cases, the secondary reflector, along with the absorber tube, must be moved away from the primary trough; and in other cases, there are secondary geometries which are complex and difficult to manufacture. Another disadvantage is that the reconcentrator must be kept in contact with or very close to the absorber tube, which forces designers to locate the reconcentrator inside the glass tube which maintains the vacuum or to implement solutions without a vacuum and glass tube, these concepts having already been tried in some Fresnel-type concentrators.
- Another possibility is to use TERC (Tailored Edge Ray Concentrator) type reconcentrators. This type of concentrator and receivers is widespread in the case of Fresnel collectors, as shown in patent WO2009023063 (A2) by Mills, David R and Phillip Schramek but not in the case of plants with parabolic trough collectors. The disadvantages of Fresnel collectors are that the lines cast shadows, optically block each other and a transversal and longitudinal cosine effect which reduces the overall optical performance, when compared to a parabolic trough collector, is produced. The challenge Fresnel Collectors continue to face is having to cost less than parabolic trough collectors in order to compensate for these optical losses.

There is another solution in the state of the art which does not have the aforementioned disadvantages and increases concentration in the collectors. This solution consists of using concentrators designed with the optical design method known as "The Simultaneous Multiple Surface (SMS)" by Miñano, Benitez, et al. The method is well described in document US 6,639,733 B2 and in other publications and it enables the design of a surface for the primary and secondary reflectors which is no longer parabolic and maintains 100% collection efficiency for rays falling on the collector, within the acceptance of the design, whilst facilitating the optimization of the concentration ratio C/Cmax. In this case, the number of solar ray reflections is two.

Therefore, the present invention focuses on the development of a new collector, based on the SMS optical design, which considerably improves the efficiency thereof but in this case applied to multi-tube receivers without vacuum and introducing improvements in its geometry, thus overcoming the difficulties encountered in the state of the art by controlling convective losses in such a way that these collectors may be used at low temperatures, whereby convection losses in relation to radiation are controlled.

In addition, the invention develops a concentration thermosolar plant containing the claimed collectors, combined with collectors having tubular receivers, which are either parabolic trough or parametric cylindrical collectors. This plant, having a combination of both types of collectors, increases efficiency in relation to existing plants because, owing to the combination of both technologies, the operation of each type of collector is optimized and convective losses are minimized.

### Description of the invention

The present invention relates to the design of a collector having a multi-tube receiver without vacuum and to the thermosolar plant combining said collectors with collectors having tubular receivers, with or without vacuum, for the direct or indirect generation of steam.

The parametric cylindrical collector having a multi-tube receiver without vacuum, object of the invention, is a symmetrical collector, formed by a primary reflector having an optically optimized geometry to maximize total concentration, an optimized secondary reconcentrator, and a receiver consisting of several tubes with a circular cross-section, each characteristic as described below:
■ The geometry of the primary reflector is two continuous and symmetrical curves which enable the concentration C/Cmax to be increased above 0.63, as well as serving to reduce wind loads. The structure is optimized to bear the different loads to which the collector is subjected and in addition, the center of gravity of the collector is located very close to the axis of rotation of the collector itself.
■ The geometry of the secondary reconcentrator is optimized and the collection efficiency of the collector is 100%. Depending on the solution selected, all or the majority of the rays are reflected on the secondary reflector prior to reaching the receiver (the number of reflections of solar rays is les than or equal to two).

In order to design the primary and secondary reflectors of the collector, the design method known as "The Simultaneous Multiple Surface (SMS)" by Miñano, Benitez, et al., is applied. The method is well described in document US 6,639,733 B2 and in other publications and it enables the design of a surface for the primary and secondary reflectors which is no longer parabolic and maintains the collection efficiency at 100% for rays falling on the collector, within the acceptance of the design, whilst allowing the concentration ratio C/Cmax to be optimized.
■ The receiver through which the heat carrying fluid circulates, made up by multiple tubes with a circular cross-section, contemplates several design options which enable convective losses to be controlled, in such a way that this collector may be used at low temperatures, whereby convection losses are controlled:
   - Receiver formed by a series of metal tubes, normally made of steel, placed next to each other and parallel, on the same horizontal plane. The tubes are supported by a thermal insulating base.
   - Receiver formed by a series of metal tubes, normally made of steel, placed in three sections: two of which are inclined at the extremities and a horizontal plane in the middle. Each section is formed by various parallel tubes. Both extremities have the same inclination in relation to the horizontal plane. The central horizontal section rests on a thermal insulating base.
   - Receiver formed by a series of metal tubes, normally made of steel, placed in three sections: two of which are inclined at the extremities and a horizontal plane in the middle. The central section is formed by several tubes and the end sections are formed by just one tube, in contact with the farthest tube of the horizontal section. The rest of the inclined plane is formed by a free flap without tubes. Both extremities have the same inclination in relation to the horizontal plane. The central horizontal section rests on a thermal insulating base.
   - Receiver formed by a series of metal tubes, normally made of steel, placed in three sections: two of which are inclined at the extremities and a horizontal plane in the middle. The central.section is formed by several tubes and the end sections are formed by only one tube, located on the mid-point of the plane. The rest of the inclined plane, at both sides of the tube, is formed by two free flaps, without tubes, one of which is joined to the horizontal plane by its extremity. Both extremities have the same inclination in relation to the horizontal plane. The central horizontal section rests on a thermal insulating base.

In any of the previous configurations, the tubes can be joined to one another by means of welding with or without additional flaps or by using clamps and in all cases, the inclusion of mechanisms allowing the longitudinal dilation of the tubes will be necessary.

In short, the geometry of the multi-tube collector being proposed optimizes the concentration ratio C/Cmax of the parametric cylindrical tube to up to values of 0.63, has a collection efficiency of 100% and a number of reflections of solar rays prior to reaching the receiver less than or equal to two. In addition, it controls convection losses in such a way that this collector may be used at low temperatures.

The collector being proposed differs from current conventional parabolic geometry but keeps the structural requirements and has a similar or lower cost.

Regarding the plant having said multi-tube collectors, two options are considered: a plant with changes of state for direct steam generation and a plant without changes of state.

The direct steam generation plant uses a fluid that changes state during its course along the plant until it arrives at the turbine in the steam form. The most common fluid for this type of plants is water.

The claimed plant is designed by dividing the solar field into two parts: one area of the solar field is used for the generation of saturated steam at temperatures of approximately 300 °C and the other area of the solar field is used for the generation of superheated steam at temperatures of approximately 500 °C.

The collectors operating in the saturated field at low temperatures are of the tubular parabolic trough type, with or without vacuum or of the parametric type having a multi-tube receiver without vacuum and are supplied by the supply water of the circuit at low temperatures. This steam is heated and passes from one collector to the next until it reaches the saturation temperature of about 300 °C.

In order to improve the efficiency of the cycle, working at higher temperatures is convenient. For this reason, the collectors in the overheating field are of the parabolic trough or parametric cylindrical type having a tubular receiver with vacuum. Overheated steam at an elevated temperature (above 500 °C) is obtained at the outlet of these collectors. The fluid at this temperature is sent directly to the turbine in order to produce electricity.

The second type of concentration plant, the plant whose fluid and working temperature range do not produce changes of state, is designed by following a circuit with several collectors connected in series.

The first collectors, that is to say, those working at low temperatures, are parabolic trough collectors with or without vacuum or parametric collectors having a multi-tube receiver. The first of all of the collectors in the series is supplied with the supply fluid of the circuit at low temperatures. This fluid is heated and passes from one collector to the next until it reaches a temperature above 300 °C.

Parabolic trough or parametric collectors with vacuum tubular receivers are connected in series with these collectors in order to work at higher temperatures. At the outlet of these collectors, the fluid has a temperature of above 500 °C, with pressures reaching up to 200 bars whereby the heat carrying fluid is CO₂. The fluid at this temperature is made to circulate through a heat exchanger to generate steam at temperature of approximately 500 °C or higher. This steam is sent to the turbine to produce electricity.

### Description of the drawings

In order to complete the description being made and with the purpose of aiding better understanding of the invention, a set of drawings representing the following in an illustrative rather than limitative manner has been attached:
Figure 1: scheme of a plant for fluid and temperature range which do not produce a change of state.
Figure 2: parametric cylindrical collector for multi-tube receiver without vacuum.
Figure 3: multi-tube receiver according to configuration 1.
Figure 4: variant of the collector according to configuration 1.
Figure 5: full collector according to configuration 1.
Figure 6: multi-tube receiver according to configuration 2.
Figure 7: full collector according to configuration 2.
Figure 8: multi-tube receiver according to configuration 3
Figure 9: multi-tube receiver according to configuration 4
Figure 10: scheme of the joining of the tubes by welding, with or without flaps.
Figure 11: scheme of the joining of the tubes with clamps.
Figure 12: general scheme of the solar field for a plant without change of state.
Figure 13: general scheme of the solar field for a plant with change of state.

The references being:
1. Collectors with multi-tube receiver without vacuum.
1'. Multi-tube receiver without vacuum, first configuration.
1". Multi-tube receiver without vacuum, second configuration.
1"'. Multi-tube receiver without vacuum, third configuration.
1^{iv}. Multi-tube receiver without vacuum, fourth configuration.
2. Collectors with vacuum tubular receiver.
3. Supply fluid at low temperature.
3'. Fluid at approx. 300 °C.
4. Output steam at an elevated temperature.
5. Primary mirror or reflector (concentrator).
6. Secondary reconcentrator.
7. Tubes with a circular cross-section without vacuum.
7'. Individual tube.
7". End tube.
8. Solar rays.
9. Insulating thermal base.
10. Sections inclined at the extremities.
11. Central horizontal plane.
12. Free flap without tubes.
13. Welding.
14. Joining flap.
15. Clamp.
16. Transparent covers.
17. Solar field.
18. Saturated field (multi-tube collectors).
19. Overheating field (parabolic trough or parametric collectors with vacuum tubular receiver).
20. Power block.

### Preferred embodiment of the invention

In order to reach a better understanding of the invention, the thermosolar plant, object of the invention, as well as the multi-tube collector, will be described below according to a preferred embodiment.

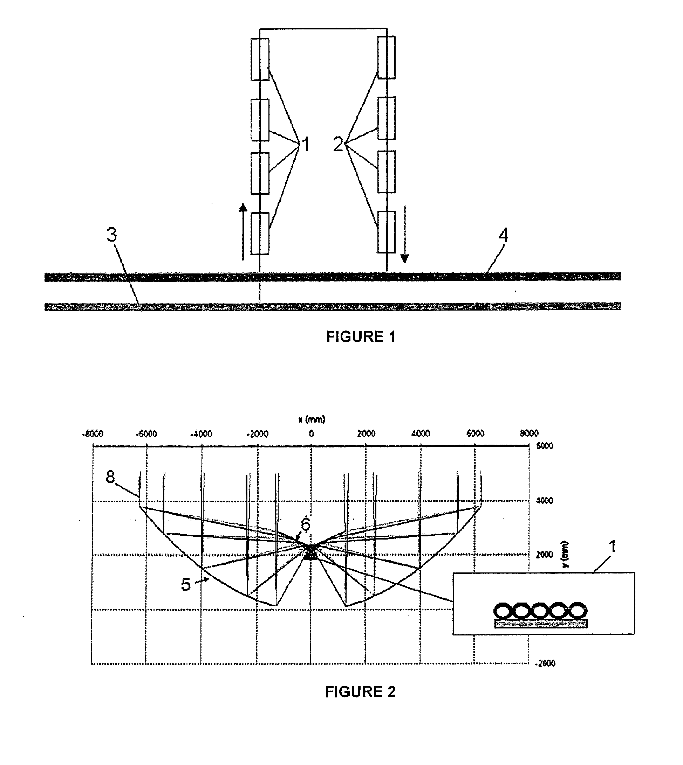

Firstly and as shown in figure 1, for a thermosolar plant whose fluid and working temperature range do not produce a change of state, the claimed thermosolar plant is designed by following a circuit with several collectors connected in series.

The first collectors, that is to say, those working at low temperatures, are of the parabolic trough concentrator-type having a tubular receiver, with or without vacuum or parametric concentrator-type having a multi-tube receiver (1), the first of them being supplied by the supply fluid of the circuit (3) at a low temperature. This fluid is heated and passes from one collector (1) to the next, until it reaches a temperature above of 300 °C.

A series of parabolic trough or parametric collectors with tubular receiver and with vacuum (2) is connected in series to the multi-tube collectors (1) to work at higher temperatures. At the outlet of these collectors, the fluid is found at an elevated temperature (4), above 500 °C. The fluid at this temperature is used, thanks to a heat exchanger, to generate steam at temperatures of approximately 500 °C or above.

The fluid without change of state circulating through this type of plant may be CO₂.

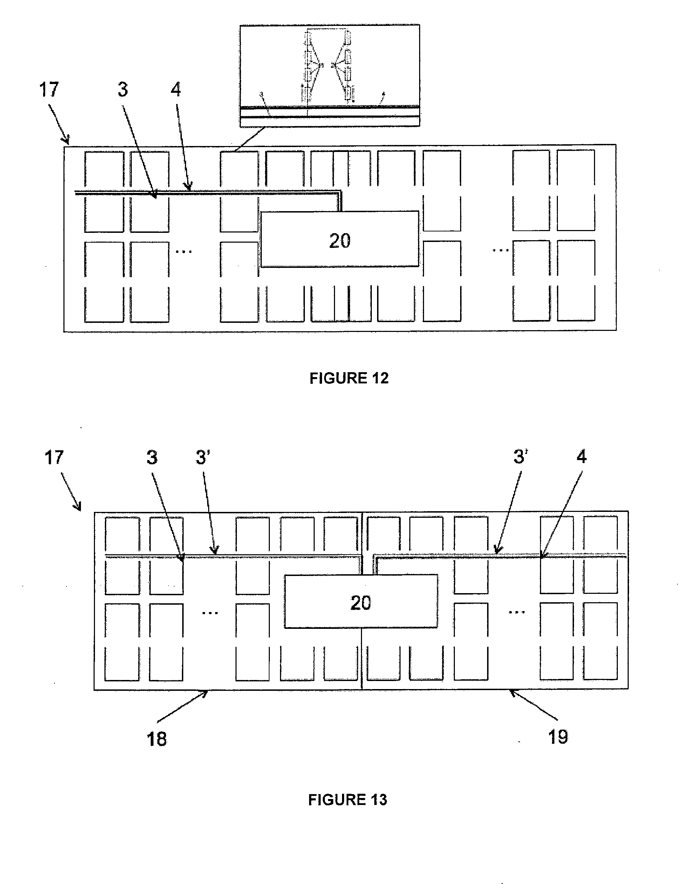

Figure 12 shows the general scheme of a solar field (17) for a typical plant without change of state. The different collector modules, such as the one shown in figure 1, are shown therein and are supplied with a fluid at a low temperature (3) and heat the fluid, conducting it, in steam form, through the outlet piping (4) to the power block (20).

Secondly, for a thermosolar plant with fluid with change of state, such as water, for direct steam generation and as shown in the configuration in figure 13, the claimed thermosolar plant is designed by dividing the solar field (17) into two parts: an area of the solar field (18) is used for the generation of steam saturated at temperatures of approximately 300 °C (3'), and another area of the solar field (19) is used for the generation of superheated steam at temperatures of approximately 500 °C (4). The collectors working at the saturating field (18) at low temperatures are of the parabolic trough type, with tubular receiver, with or without vacuum or of the parametric type with multi-tube receiver (1) and are supplied with the supply water of the circuit (3) at low temperatures (approximately 240 °C). This steam is heated and passes from one collector (1) to the next until it reaches the saturation temperature of about 300 °C (3'). This saturated steam (3') is sent to the overheating area (19).

Working at higher temperatures is convenient in terms of increasing the efficiency of the cycle. Therefore, the collectors of the overheating field (19) are of the parabolic trough or parametric type, with tubular receiver, with vacuum (2). At the outlet of these collectors, overheated steam at a high temperature (4), above 500 °C, is obtained in form of steam. The fluid at this temperature is sent directly to the turbine for the production of electricity.

As already indicated, the tubular collectors, whether parabolic trough or parametric and with or without vacuum, are known in the state of the art and therefore no figure representing them is included.

In terms of the new parametric cylindrical collector for multi-tube receiver, without vacuum or Multitube (1), it is shown in figure 2. It is a symmetrical solar collector formed by a primary mirror (5) with an optically optimized geometry to maximize total concentration, an optimized secondary reconcentrator (6) and a receiver (1), formed by multiple tubes with a circular cross-section without vacuum (7).

As shown in figure 2, the geometry of the primary reflector (5) is composed of two continuous symmetrical parametric curves that are able to increase concentration C/Cmax to more than 0.63, as well as to reduce wind loads.

The structure is optimized to bear the different loads to which the collector is subjected and in addition, the collector's center of gravity is very close to the axis of rotation of the collector itself.

The geometry of the secondary reconcentrator (6) is optimized and the collection efficiency of the collector is 100%. Depending on the selected solution, all or the majority of the rays (8) are reflected on the secondary reflector (6) before reaching the receiver (1).

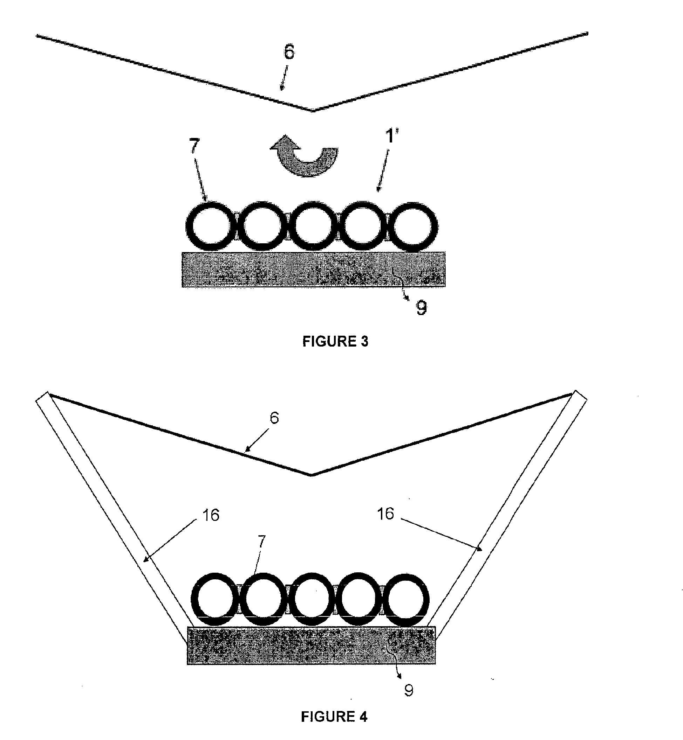

The multi-tube receiver (1) is formed by multiple tubes with a circular cross-section, without a vacuum (7), several design options being considered:
- First configuration: figure 3 shows the multi-tube receiver (1') formed by a series of metal tubes (7), normally made of steel, placed next to each other and parallel, on the same horizontal plane. The tubes are supported by an insulating thermal base (9).
   Figure 4 shows an alternative for this first variation, wherein inclined transparent covers (16) beginning from the insulating base (9) are added in order to minimize convective losses. Even though the figure only shows this type of configuration, any of the designs below may be added.

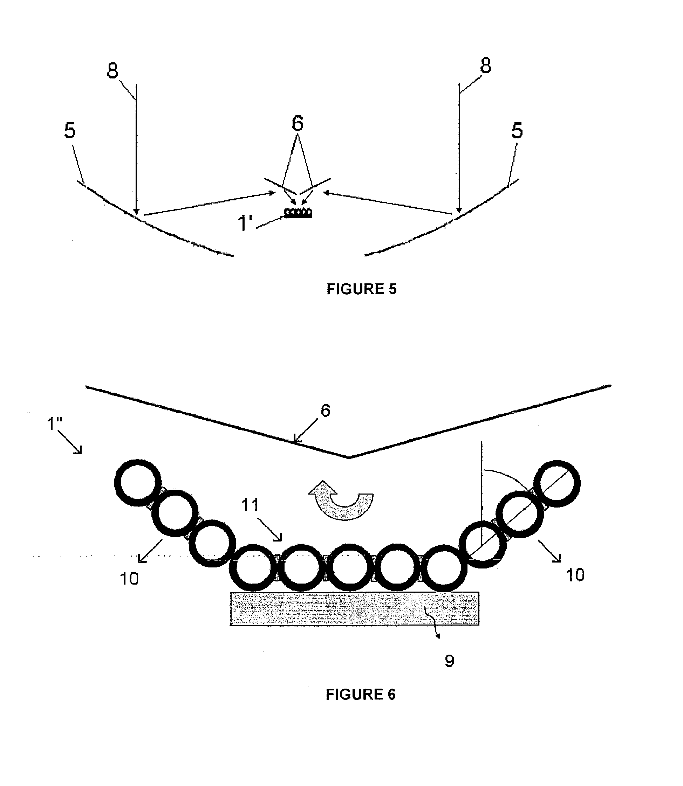

   Figure 5 shows the full collector with the discontinuous first (5), the secondary reconcentrator (6), the multi-tube receiver (1'), and the solar rays (8).
- Second configuration: figure 6 shows another alternative for the design of the multi-tube receiver (1'), formed by a series of metal tubes (7), normally made of steel, placed in three sections: two of which are inclined at the extremities (10) and a horizontal plane in the middle (11). Each section is formed by several parallel tubes (7). Both extremities (10) have the same inclination in relation to the horizontal plane (11). The central horizontal section (11) rests on a thermal insulating base (9).

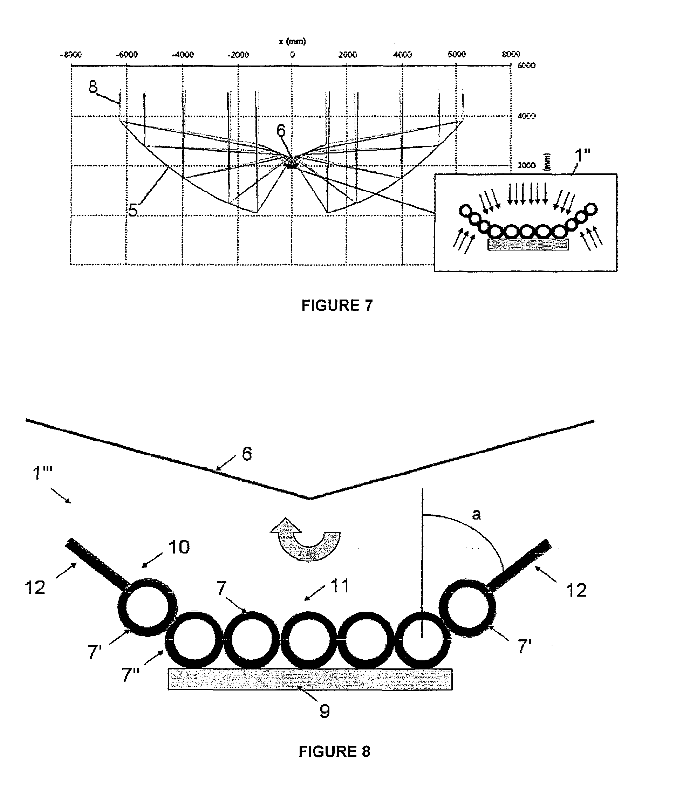

   Figure 7 shows the full collector with the discontinuous first (5), the secondary reconcentrator (6), the multi-tube receiver (1 ") according to this configuration and the solar rays (8).
- Third configuration: figure 8 shows a multi-tube receiver (1'") formed by a series of metal tubes (7), normally made of steel, placed in three sections: two of which are inclined at the extremities (10), and a horizontal plane in the middle (11). The central section (11) is formed by several tubes (7) and the end sections (10) are formed by just one tube (7'), which is in contact with the farthest tube (7") of the horizontal section (11). The rest of the inclined plane is formed by a free flap (12), without tubes. Both extremities (10) have the same inclination in relation to the horizontal plane. The central horizontal section (11) rests on a thermal insulating base (9).

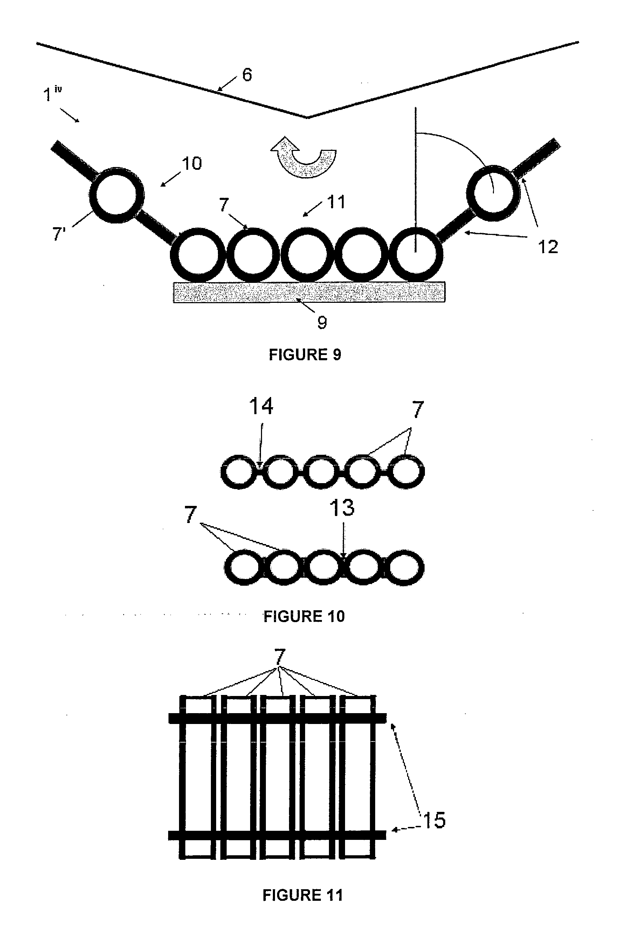

- Figure 9 shows a multi-tube receiver (1^{iv}) formed by a series of metal tubes (7), normally made of steel, placed in three sections: two of which are inclined at the extremities (10) and a horizontal plane in the middle (11). The central section (11) is formed by several tubes (7) and the end sections (10) are formed by just one tube (7'), located in the middle of the inclined plane (10). The rest of the inclined plane, at both ends of the tube (7'), is formed by two free flaps (12), without tubes, one of which is joined to the horizontal section by its extremity. Both extremities (10) have the same inclination in relation to the horizontal plane. The central horizontal section (11) rests on a thermal insulating base (9).

In any of the previous configurations, the tubes (7) are joined to each other by welding. In some cases one tube is welded (13) directly to another (see figure 10 below) and in other cases a small flap (14) is added between them (see figure 10 above) or clamps (15) are used (figure 11).

Therefore, the claimed solar plant posits the combination of two different types of collectors, one new one and one known one, which assumes significant progress in the solar energy production sector and increases the efficiency thereof considerably by making each collector work within the most appropriate temperature range.

## Claims

1. Solar collector with multi-tube receiver **characterized in that** it is of the parametric type and has a primary reflector formed by two continuous symmetrical parametric curves, a secondary reconcentrator and a receiver through which the heat carrying fluid circulates, the primary reflector and the secondary reconcentrator being optically designed by following the "The Simultaneous Multiple Surface (SMS)" method created by Miñano, Benitez, et al. and whereby the receiver (1) comprises several metal tubes having a circular cross-section (7), placed next to one other and parallel and joined to each other, all supported on the same horizontal plane on an insulating thermal base (9).

2. Solar collector with multi-tube receiver according to claim 1, **characterized in that** two sections inclined at the extremities (10), formed by several parallel tubes (7), are added to the horizontal plane of the multi-tube receiver (1 "), the sections inclined at the extremities (10) having the same inclination in relation to the horizontal plane (11).

3. Solar collector with multi-tube receiver according to claim 1, **characterized in that** two sections inclined at the extremities (10), which have the same inclination in relation to the horizontal plane, are added to the horizontal plane of the multi-tube receiver (1'"), the sections inclined at the extremities (10) being formed by only one tube (7'), this single tube (7') being located in contact with the farthest tube (7") of the horizontal section (11); the rest of the inclined plane being formed by a free flap (12), without tubes.

4. Solar collector with multi-tube receiver according to claim 1, **characterized in that** two sections inclined at the extremities (10), which have the same inclination in relation to the horizontal plane; are added to the horizontal plane of the multi-tube receiver (1^{iv}), the sections inclined at the extremities (10) being formed by just one tube (7') located in the middle of each inclined section (10); the rest of the inclined plane, at both sides of the tube (7'), being formed by two free flaps (12), without tubes.

5. Solar collector with multi-tube receiver according to claim 1, **characterized in that** inclined transparent covers (16) beginning from the insulating base (9), which minimize convective losses, are added.

6. Solar collector with multi-tube receiver according to claim 1, **characterized in that** the tubes (7) are joined together by welding.

7. Solar collector with multi-tube receiver according to claim 6, **characterized in that a** small flap (14) is added between the tubes (7).

8. Solar collector with multi-tube receiver according to claim 1, **characterized in that** the tubes (7) are joined together by means of clamps (15).

9. Thermosolar plant having solar collectors with multi-tube receivers, as described in previous claims, whose fluid and working temperature range do not produce change of state, **characterized in that** it is designed following a circuit with several collectors connected in series and combines parametric solar collectors with multi-tube receiver (1) with a series of parabolic trough or parametric collectors with vacuum tubular receiver (2).

10. Thermosolar plant having solar collectors with multi-tubular receivers according to claim 9, whose fluid and working temperature range do not produce change of state, **characterized in that** the fluid circulating is CO₂.

11. Thermosolar plant having solar collectors with multi-tube receivers, as described in previous claims, for direct steam generation, **characterized in that** the plant is designed by dividing the solar field (17) into two parts: one area of the solar field (18) is used for the generation of saturated steam with parametric collectors having multi-tube receiver (1) and the other area of the solar field (19) is used for the generation of superheated steam with parabolic trough collectors with tubular receivers or parametric collectors with vacuum tubular receivers (2).

12. Thermosolar plant having solar collectors with multi-tube receivers according to claim 11, whose fluid and working temperature range produce change of state, **characterized in that** the fluid circulating is water.

13. Operating method of the thermosolar plant, described in claim 9, **characterized in that** fluid at a low temperature is introduced into the first parametric collector with multi-tube receiver (1) and is heated by passing from one collector to the next (1) until it reaches a temperature above 300 °C; after reaching said temperature, the fluid begins to circulate through a series of parabolic trough or parametric collectors with vacuum tubular receiver (2), a fluid at a temperature (4) above 500 °C being obtained at the outlet of these collectors (2).

14. Operating method of the thermosolar plant described in claim 11, **characterized in that** the collectors working at the saturating field (18) at low temperatures are supplied by the supply water of the circuit (3) at low temperatures and as it circulates through the collectors, the water is heated and passes from one collector to the other (1), until it reaches the steam saturation temperature of about 300 °C before the saturated steam is sent to the collectors in the overheating field (19) and at the outlet of these collectors, superheated steam at a temperature (4) of above 500 °C, is obtained, this steam being sent directly to a turbine for the production of electricity.
